# EUROPEAN PATENT SPECIFICATION

(11) **EP 2 580 454 B1**
(45) Date of publication and mention of the grant of the patent: **29.11.2017**
(21) Application number: 11730728.0
(22) Date of filing: 08.06.2011
(51) Int. Cl.: F02D 41/10, B60W 40/10, B60R 16/023

(54) **ENGINE FUEL ECONOMY UNIT**
KRAFTSTOFFVERBRAUCH METHODE FÜR VERBRENNUNGSMOTOR
SYSTÉME DE REDUCTION DE CONSOMMATION DE CARBURANT

(30) Priority: 08.06.2010 GB 201009574
(43) Date of publication of application: 17.04.2013
(73) Proprietor: Zeta Automotive Limited, Bicester OX26 4LB (GB)
(72) Inventor: COX, Alan Robert, Oxford OX3 8HF (GB)
(74) Representative: J A Kemp
(86) International application number: PCT/GB2011/051073
(87) International publication number: WO 2011/154736

(56) References cited:
- EP-A1- 1 382 477
- WO-A1-2004/098941
- WO-A1-2009/119228
- FR-A1- 2 935 441
- US-A- 6 021 370
- US-A1- 2002 065 596
- US-A1- 2003 055 551
- US-A1- 2005 182 556

## Description

This invention relates to a unit for improving fuel economy of an engine. The invention was initially conceived for use with internal combustion engines powering motor vehicles. However, it may also be used with electric motors, especially but not exclusively if battery powered, and the invention is not restricted to being for use with vehicles. In the context of this specification, the term "engine" is intended to encompass not only internal combustion engines but also electric motors, and the term "fuel" is intended to encompass not only fuel substances but also electricity.

The fuel economy of a vehicle powered by an IC engine depends on a number of factors. Some of these factors cannot be varied to any great extent by the vehicle user but others can. For example, fuel economy decreases: if the vehicle is driven at excessively high speed; if too low a gear is selected for a particular road speed so that the engine speed is excessively high; if the demand on the engine is suddenly increased by flooring the accelerator pedal, in particular with a petrol engine with acceleration enrichment; if in particular a goods vehicle is driven at or near its limit of performance when lightly laden; and if an engine is allowed to idle when the vehicle is stationary.

EP 1 382 477 A1 discloses an accelerator controller in which fuel consumption due to abrupt acceleration is reduced. An auto-cruising control is automatically started without intention of the driver and executes a control for gently and reasonably accelerating a vehicle even when an accelerator pedal is displaced abruptly. When a regular running state is detected, the auto-cruising control is started automatically. When the auto-cruising control is effective and the accelerator pedal is displaced substantially, fuel consumption is restricted by setting an aimed vehicle speed stepwise with small speed changes, so that a large amount of fuel is not supplied.

WO 2004/098941 A1 discloses an accelerator pedal signal controller in which a speed or acceleration control module is connected between a power control pedal and an engine/motor control module, wherein the power control pedal outputs an analogue pedal position to the control module. The control module processes this signal by comparing actual speed/acceleration values of the vehicle with corresponding control data and dependent on said comparison delivers a modified signal output to the engine/motor control module thereby controlling the vehicle's speed/acceleration at the respective control values.

US 2003/0055551 A1 discloses a method and system for providing vehicle control to a driver in which an accelerator pedal position and other various inputs are utilised. A power change control module uses the accelerator pedal position and the other various inputs to give the driver a combination of speed and torque control. In operating a vehicle at speeds ranging from 0 to 45 miles per hour, the power change controller provides the driver with torque control by mapping pedal position to electronic throttle angle according to a plurality of predetermined acceleration functions. In operating the vehicle at speeds greater than 45 miles per hour, the power change controller provides the driver with speed control by mapping the electronic throttle angle according to a plurality of predetermined speed functions.

US 2002/0065596 A1 discloses a vehicle drive force control system in which the upshift and downshift timing of an automatic transmission is set with a predetermined hysteresis in response to the vehicle speed and the depression amount of the accelerator pedal. When the accelerator pedal is depressed in a hysteresis region before a downshift, the output torque of the automatic transmission is saturated before the depression amount takes a maximum value. As a result, even when depressing the accelerator pedal further, increases do not result in the output torque of the automatic transmission. When the depression amount is less than a predetermined value, the disclosed arrangements set the rate of increase in the target output torque of the automatic transmission to a value which is smaller than the rate of increase when the depression amount is greater than the predetermined value. Thus saturation of the output torque of the automatic transmission can be prevented by controlling the engine output based on the target output torque determined in this manner while the rate of increase in the drive force when the accelerator is deeply depressed can be maintained.

An aim of the present invention, or at least of specific embodiments of it, is to provide a device which can result in fuel economy being improved.

US 6 021 370 A discloses a vehicle/engine acceleration rate management system including means for determining vehicle acceleration rate and a control computer providing a fuelling signal to an internal combustion engine fuelling system. The control computer is responsive to a gear ratio signal indicative of one of a plurality of selectable transmission gear ratios currently engaged with the engine and a vehicle acceleration rate signal to control the vehicle acceleration rate by limiting the fuelling signal whenever the vehicle acceleration rate signal exceeds a vehicle acceleration limit function.

The scope of the invention is defined in the appended claims. The acceleration threshold value is dependent on the speed of the output member. For example, the lower the output member speed, the higher the permitted acceleration of the output member.

The fuel economy unit may further include means for deriving the acceleration of the output member by differentiation with respect to time of the speed of the output member. Therefore, having received a signal indicative of speed of the output member, or having derived a speed signal from some other input signal (such as a position signal), the fuel economy unit does not need to receive any further input signals in order to determine the acceleration of the output member.

The modifying means is also operable to modify the coupling of the demand signal to the engine demand input in dependence upon the speed of the output member to limit the speed of the output member. For example, the modifying means is operable to modify the demand signal to represent a lesser demand when the speed of the output member reaches an output speed threshold value. In the case of a vehicle, this feature can therefore be used to limit the vehicle's road speed.

In a disclosed arrangement in which the fuel economy unit is for use for example with an engine system also having a variable-ratio gearbox between the engine and the output member (e.g. a manual or automatic discrete ratio or continuously variable gearbox), the fuel economy unit further includes further means for receiving a further input signal indicative of the speed of the engine or from which the speed of the engine can be derived. The acceleration threshold value is made dependent on the speed of the engine, with the modifying means limiting the acceleration of the output member when the acceleration of the output member reaches a value dependent on the speed of the engine.

The modifying means is also operable to modify the demand signal to represent a lesser demand when the speed of the engine reaches an engine speed threshold value. In order again to provide a smooth response of an engine fitted with the fuel economy unit, the modifying means is operable to modify the demand signal to represent a progressively reducing demand while the speed of the engine exceeds an engine speed threshold value.

Disclosed arrangements extend to an engine system comprising: an engine (such as an internal combustion engine, an electric motor, or a hybrid of the two) having a demand input; an output member drivable by the engine; a user-operable demand control for providing a demand signal coupled to the engine demand input to control the engine output, and a fuel economy unit according to disclosed arrangements for modifying the coupling of the demand signal to the engine demand input.

In the case where the engine includes an electronic ECU having an electrical demand input acting as the engine demand input and where the user-operable demand control comprises a demand sensor for producing an electrical demand signal dependent on the position of the demand control and a connection for connecting the demand signal to a demand input of the ECU, the modifying means is preferably operable to modify the demand signal between the demand sensor and the demand input of the ECU.

In the case where the engine system includes a first sensor for producing an electrical signal indicative of acceleration of the output member or from which acceleration of the output member can be derived, it is preferably that electrical signal which is received by the signal receiving means of the fuel economy unit.

Particularly in the case where the engine system includes a variable-ratio gearbox between the engine and the output member and a second sensor for producing a further electrical signal indicative the speed of the engine, or from which the speed of the engine can be derived, it is preferably that further electrical signal which is received by the further signal receiving means of the fuel economy unit.

Disclosed arrangements extend to a motor vehicle having an engine system in which the output member has a speed which is substantially proportional to the road speed of the vehicle. For example, the output member may be a gearbox output shaft or a road wheel or its hub.

Specific embodiments of the present invention will now be described, purely by way of example, with reference to the accompanying drawings, in which:
Figure 1 is a schematic block diagram of a conventional vehicle engine management system;
Figure 2 is similar to Figure 1, but showing the addition of a fuel economy unit of a first embodiment of the invention;
Figure 3 is a schematic diagram illustrating one form of functioning of the fuel economy unit of Figure 2;
Figure 4 is a schematic diagram illustrating one form of functioning of the fuel economy unit of Figure 2;
Figure 5 is similar to Figure 2, but showing a fuel economy unit of a second embodiment of the invention; and
Figure 6 is a schematic diagram illustrating functioning of the fuel economy unit of Figure 5.

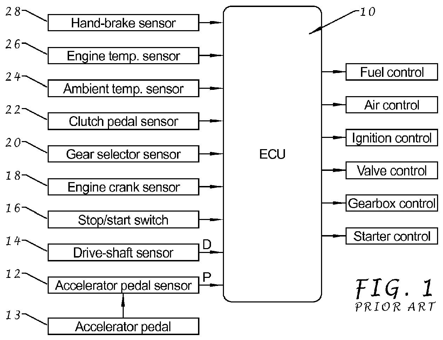

Referring to Figure 1, in a conventional engine vehicle management system, an engine control unit (ECU) 10 receives input signals from a number of sensors and switches, such as a sensor 12 for an accelerator pedal 13, a vehicle drive-shaft position sensor 14, a start-stop switch 16, and engine crankshaft position sensor 18, a gear selector sensor 20, a clutch pedal sensor 22 (if the vehicle has a manual gearbox), an ambient temperature sensor 24, an engine temperature sensor 26 and a hand-brake sensor 28. The ECU 10 processes the input signals to produce a number of output signals for controlling various engine functions, such as the fuel and air supply rates, the ignition timing, the valve timing, the gear selected by the engine's gearbox and the operation of the engine's starter motor. The ECU 10 may be implemented as a single unit, or a number of separate units. The input and output signals may be supplied to and from the ECU 10 by individual conductors or by a bus, such as a CAN-bus. The various signals may be analogue, digital or pulsed. Included amongst the input signals are the accelerator pedal signal P representing the position to which the driver of the vehicle has depressed the accelerator pedal 13 and the vehicle drive-shaft position signal D which may for example take the form of a pulse train with one or more pulses for each turn of a drive shaft of the vehicle, in which case the frequency of the pulse train is proportional to the road speed of the vehicle.

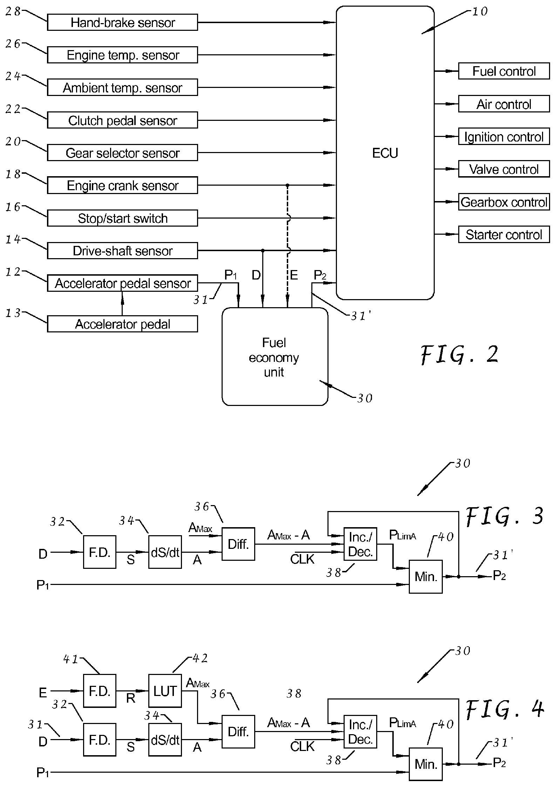

Referring now to Figure 2, the fuel economy unit 30 of the first example receives the drive-shaft position signal D. The fuel economy unit 30 is also disposed in series with the signal connection 31,31' from the accelerator pedal sensor 12 to the ECU 10, so that the fuel economy unit 30 receives as an input the accelerator pedal signal P₁ from the accelerator pedal sensor 12 and provides to the ECU 10 an output accelerator pedal signal P₂ which may differ from the input accelerator pedal signal P₁ in dependence upon the drive-shaft position signal D.

Referring to Figure 3, in one form of functioning of the fuel economy unit 30, the unit 30 performs a frequency detecting function 32 which detects the frequency of the drive-shaft position signal D to produce a signal S representing the road speed of the vehicle. The unit 30 also performs a differentiating function 34 which differentiates the speed signal S with respect to time to produce an acceleration signal A representing the road acceleration of the vehicle. The unit 30 also performs a differencing function 36 which subtracts the acceleration signal A from a preset constant A_{Max} representing the maximum allowable road acceleration of the vehicle to produce a difference signal A _{Max}-A representing the amount by which the road acceleration is less than the maximum allowable acceleration. With each of a series of clock pulses CLK having a frequency F, the unit 30 also performs an incrementing/decrementing function 38, depending on the sign of the difference signal A_{Max}-A, on the output accelerator pedal signal P₂ to produce a pedal limit signal P_{LimA}. In particular, if the difference signal A_{Max}-A is positive, then the incrementing/ decrementing function 38 adds a predetermined amount dP to the output accelerator pedal signal P₂ to produce the pedal limit signal P _{LimA}. On the other hand, if the difference signal A_{Max}-A is negative, then the incrementing/decrementing function 38 subtracts the predetermined amount dP from the output accelerator pedal signal P₂ to produce the pedal limit signal P_{LimA}. The predetermined amount dP may, for example, be 2% of the maximum input accelerator pedal signal. The frequency F of the clock signal CLK may, for example, be 10 Hz. The unit 30 furthermore performs a minimising function 40 on the input accelerator pedal signal P₁ and the pedal limit signal P_{LimA} to produce the output accelerator pedal signal P₂, which is the lesser of P₁ and P_{LimA}.

It will therefore be appreciated that:
- the output accelerator pedal signal P₂ will never exceed the input accelerator pedal signal P₁;
- if the calculated road acceleration A exceeds the predetermined maximum road acceleration A_{Max}, the output accelerator pedal signal P₂ will be ramped down at a rate of dP x F (for example 20% per second); and
- if and while the input accelerator pedal signal P₁ exceeds the output accelerator pedal signal P₂ and the calculated road acceleration A is less than the predetermined maximum road acceleration A_{Max}, the output accelerator pedal signal P₂ will ramp up at a rate of dP x F (for example 20% per second).

It will be noted that with the form of functioning described with reference to Figure 3, the maximum allowable acceleration is a preset constant A_{Max}. However, it is desirable that the maximum allowable acceleration progressively decreases the higher the engine speed or the higher the road speed. In order to provide this additional functionality, with the maximum allowable acceleration being dependent on engine speed, another form of functioning of the fuel economy unit will now be described with reference to Figures 2 and 4. The unit 30 of Figure 4 additionally receives as an input the engine crank position signal E, as shown by the dashed line in Figure 2. The unit 30 includes a further frequency detecting function 41 which detects the frequency of the engine crank position signal E to produce a signal R representing the engine speed of the vehicle. The engine speed signal R is supplied to a look-up function 42 which is programmed to produce the maximum allowable acceleration signal A_{Max} in dependence upon the engine speed signal R. At low engine speeds, the maximum allowable acceleration signal is relatively high, but decreases progressively with increasing engine speed. Rather than employing a look-up function 42, a mathematical function may be employed, for example an inverse function or an inverse square function.

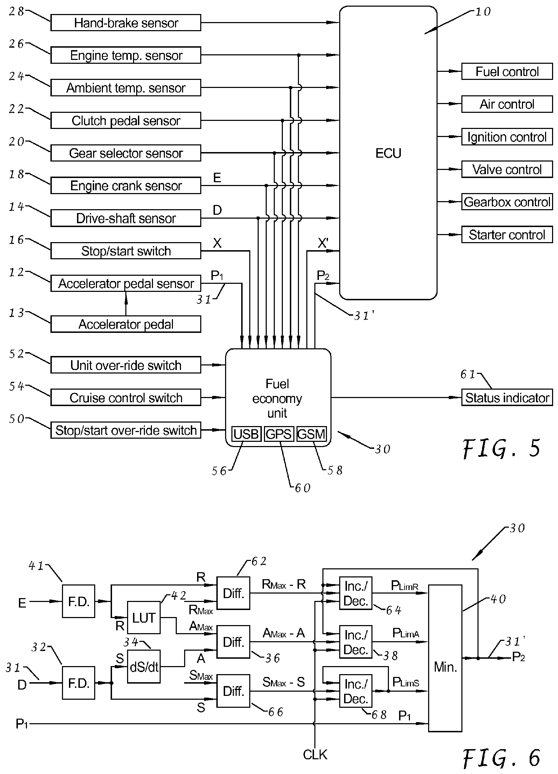

Referring now to Figures 5 and 6, the fuel economy unit 30 of the embodiment of the invention provides additional functionality compared with the unit 30 described above with reference to Figures 2 and 4.

The unit 30 of Figure 6 also performs a differencing function 62 which subtracts the engine speed signal R from a preset constant R_{Max} representing the maximum allowable engine speed to produce a difference signal R_{Max}-R representing the amount by which the engine speed is less than the maximum allowable engine speed. With each of the series of clock pulses CLK, the unit 30 also performs an incrementing/decrementing function 64, depending on the sign of the difference signal R_{Max}-R, on the output accelerator pedal signal P₂ to produce another pedal limit signal P_{LimR}. In particular, if the difference signal R_{Max}-R is positive, then the incrementing/decrementing function 64 adds the predetermined amount dP to the output accelerator pedal signal P₂ to produce the pedal limit signal P_{LimR}. On the other hand, if the difference signal R_{Max}-R is negative, then the incrementing/decrementing function 64 subtracts the predetermined amount dP from the output accelerator pedal signal P₂ to produce the pedal limit signal P_{LimR}. With each of the series of clock pulses CLK, the unit 30 also performs an incrementing/decrementing function 68 on a pedal limit signal P_{LimS} depending on the sign of the difference signal S_{Max}-S. If the difference signal is positive, then the incrementing/decrementing function 68 adds the predetermined amount dP to the pedal limit signal P_{LimS} provided that the pedal limit signal P_{LimS} is less than a preset maximum P_{Max} (for example 100%). On the other hand, if the difference signal S_{Max}-S is negative, then the incrementing/decrementing function 68 subtracts the predetermined amount dP from the pedal limit signal P_{LimS} provided that the pedal limit signal P_{LimS} is greater than a preset minimum P_{Min} (for example 0%). The minimising function 40 operates on the input accelerator pedal signal P₁ and the three pedal limit signals P_{LimA}, P_{LimR} and P_{LimS} to produce the output accelerator pedal signal P₂ which is the least of those four signals P₁, P_{LimA}, P_{LimR} and P_{LimS}.

It will therefore be appreciated that:
- the output accelerator pedal signal P₂ will never exceed the input accelerator pedal signal P₁;
- if and while: (a) the calculated road acceleration A exceeds the maximum road acceleration A_{Max}, or (b) the calculated engine speed R exceeds the predetermined maximum engine speed acceleration R_{Max}, then the output accelerator pedal signal P₂ will be ramped down at a rate of dP x F (for example 20% per second);

- if and while the calculated road speed S exceeds the predetermined maximum road speed S_{Max}, the pedal limit signal P_{LimS} is ramped down at a rate of dP x F, and once the pedal limit signal P_{LimS} becomes less than the other three signals P₁, P_{LimA} and P_{LimR}, it begins to ramp down the output accelerator pedal signal P₂.
- if and while: (a) the input accelerator pedal signal P₁ exceeds the output accelerator pedal signal P₂, (b) the calculated road acceleration A is less than the maximum road acceleration A_{Max}, (c) the calculated engine speed R is less than the predetermined maximum engine speed R_{Max}. and (d) the output accelerator pedal signal P₂ is not being limited by the limit signal P_{LimS}, then the output accelerator pedal signal P₂ will ramp up at a rate of dP x F (for example 20% per second).

In addition to modifying the accelerator pedal signal from P₁ to P₂, the fuel economy unit 30 of the embodiment of Figures 5 and 6 also performs other functions in order to improve the fuel economy of the vehicle. As shown in Figure 5, the unit 30 is also disposed in series with the signal connection from the stop/start switch 16 to the ECU 10, so that the fuel economy unit receives as an input the stop/start switch signal X from the stop/start switch and provides to the ECU 10 an output stop/start signal X' which may differ from the input stop/start switch signal. The unit 30 is also connected to receive signals from the gear selector sensor 20, the clutch pedal sensor 22 (if the vehicle has a manual gearbox), the ambient temperature sensor 24 and the engine temperature sensor 26. The unit 30 normally passes the stop/start signal X without modification. However, in the event that all of the following criteria are met, the unit 30 is arranged to produce a stop/start signal X' which commands the ECU 10 to stop the engine:
- the road speed signal S has represented for a preset time that the vehicle is stationary, and
- the engine speed signal R represents that the engine speed is below a preset threshold, and
- the signal from the gear selector sensor 20 represents that the gearbox is in neutral, and
- the signal from the engine temperature sensor 26 represents that the engine temperature is between two temperature thresholds, and
- the signal from the ambient temperature sensor 24 represents that the ambient temperature is above a preset threshold.

Furthermore, in the event that any of the following criteria are met, the unit 30 is arranged to produce a stop/start signal X' which commands the ECU 10 to restart the engine:
- the signal from the stop/start switch represents that the driver wishes to start the engine, or
- the signal from the clutch pedal sensor 22 represents that the driver has depressed the clutch, or
- the road speed signal S represents that the vehicle has started to move, or
- the accelerator pedal signal P₁ represents that the driver has depressed the accelerator pedal.

A stop/start over-ride switch 50 is provided in addition to the vehicle's conventional controls and is connected to the unit 30. The unit 30 is arranged to inhibit its stop/start functionality when the over-ride switch 50 is operated.

The fuel economy unit 30 may also be provided with other functionality. For example, a unit over-ride switch 52 may be provided in addition to the vehicle's conventional controls. When the unit over-ride switch 52 is operated, the unit 30 responds by directly passing the accelerator pedal input signal P₁ as the accelerator pedal output signal P₂. Also, a cruise-control switch 54 may be provided in addition to the vehicle's conventional controls. When the cruise-control switch 54 is operated, the unit 30 responds by storing the value of the current road speed signal S and then varying the output accelerator pedal signal P₂ as required so as to maintain the road speed of the vehicle at the stored value.

The fuel economy unit 30 may be implemented by a microcontroller and associated memory storing the operating program of the microcontroller, the maximum road and engine speed constants S_{Max}, R_{Max} and the maximum acceleration constant A_{Max} or the look-up table for the values of A_{Max} as a function of engine speed R. The unit 30 may be provided with a serial port 56 so that the program can be updated and the constants and look-up table can be changed. The unit 30 may be provided with a mobile telephone GSM messaging module 58 so that the constants and look-up table can be changed remotely. The unit 30 may also be arranged, in response to a particular command received by the messaging module 58, to disable the accelerator pedal output P₂ to the ECU 10 so that the vehicle can be remotely disabled for example in the event of theft. The unit 30 may also be provided with a GPS positioning module 60 so that the position of the vehicle can be reported via the messaging module 58. The unit 30 may also be provided with a status indicator 61 such as one or more LEDs which are arranged to indicate to the vehicle driver for example that the unit 30 is limiting the speed or acceleration of the vehicle or the speed of the engine.

Although the fuel economy devices 30 have been described above and shown in the drawings as being for use with a vehicle having an internal combustion engine, they may also be used with electric motor systems to modify a signal between a demand control of the electric motor system and a demand input of the system.

The fuel economy devices 30 described above can be fitted to a vehicle during manufacture, or retro-fitted after vehicle manufacture, without requiring any modification of the ECU 10. The fuel economy devices 30 may also be used with engines and motors which are not used to power vehicles.

It should be noted that the embodiments of the invention has been described above purely by way of example and that many other modifications and developments may be made thereto within the scope of the present invention.

## Claims

1. A fuel economy unit for an engine system comprising an engine having a demand input, an output member drivable by the engine, and a user-operable demand control for providing a demand signal coupled to the engine demand input to control the engine output, the fuel economy unit comprising:
means for receiving an input signal indicative of acceleration of the output member or from which acceleration of the output member can be derived; the input receiving means, or a further input receiving means, being arranged to receive an input signal indicative of the speed of the engine or from which the speed of the engine can be derived; the input receiving means, or a further input receiving means, being arranged to receive an input signal indicative of the speed of the output member or from which the speed of the output member can be derived;
means for modifying the coupling of the demand signal to the engine demand input in dependence upon the acceleration of the output member to limit the acceleration of the output member, wherein:
the modifying means is operable to calculate a first demand signal P_{LimA}, the first demand signal P_{LimA} representing a progressively reducing demand while the acceleration of the output member exceeds an acceleration threshold value, wherein the modifying means is configured to calculate the acceleration threshold value using the speed of the engine provided by the input signal indicative of the speed of the engine or from which the speed of the engine can be derived, such that the acceleration threshold value is dependent on the speed of the engine,
the modifying means is additionally operable to calculate a second demand signal P_{LimR}, the second demand signal P_{LimR} representing a progressively reducing demand while the speed of the engine exceeds an engine speed threshold value, wherein the speed of the engine is also provided by the input signal indicative of the speed of the engine or from which the speed of the engine can be derived,
the modifying means is additionally operable to calculate a third demand signal P_{LimS}, the third demand signal P_{LimS} representing a progressively reducing demand while the speed of the output member exceeds an output member speed threshold value,
the acceleration threshold value is calculated by supplying the speed of the engine to a look-up table or mathematical function and the engine speed threshold value and the output member speed threshold values are preset constant values,
**characterized in that**:
the modifying means is configured to calculate a modified demand signal P₂ to be applied to the engine demand input by comparing the following four signals: an input accelerator pedal signal P₁ received from the user-operable demand control, the first demand signal P_{LimA}, the second demand signal P_{LimR}, and the third demand signal signal P_{LimS}, wherein:
the modified demand signal is the least of said four signals.

2. A fuel economy unit as claimed in claim 1, wherein the input signal indicative of the speed of the engine or from which the speed of the engine can be derived is an engine crank position signal and the fuel economy unit further comprises a frequency detecting function unit (41) configured to detect the frequency of the engine crank position signal and thereby provide the speed of the engine.

3. A fuel economy unit as claimed in claim 1, wherein:
the acceleration threshold value progressively decreases with increasing engine speed.

4. A fuel economy unit as claimed in any preceding claim, further including:
means for deriving the acceleration of the output member by differentiation with respect to time of the speed of the output member.

5. A fuel economy unit as claimed in claim 1, further comprising a telephone GSM messaging module (53) configured to allow the preset constants and look-up table to be changed remotely.

6. An engine system comprising:
an engine having a demand input;
an output member drivable by the engine;
a user-operable demand control for providing a demand signal coupled to the engine demand input to control the engine output; and
a fuel economy unit as claimed in any preceding claim for modifying the coupling of the demand signal to the engine demand input.

7. An engine system as claimed in claim 6, wherein:
the engine is or includes an internal combustion engine.

8. An engine system as claimed in claim 6 or 7, wherein:
the engine is or includes an electric motor.

9. An engine system as claimed in any of claims 6 to 8, wherein:
the engine includes an electronic ECU having an electrical demand input acting as the engine demand input;
the user-operable demand control comprises a demand sensor for producing an electrical demand signal dependent on the position of the demand control, and a connection for connecting the demand signal to the demand input of the ECU; and
the modifying means is operable to modify the demand signal between the demand sensor and the demand input of the ECU.

10. An engine system as claimed in any of claims 6 to 9, wherein:
the engine system includes a first sensor for producing an electrical signal indicative of acceleration of the output member or from which acceleration of the output member can be derived, the electrical signal being received by the signal receiving means of the fuel economy unit.

11. An engine system as claimed in claim 10, wherein:
the first sensor is arranged to produce an electrical signal indicative of speed of the output member or from which speed of the output member can be derived.

12. An engine system as claimed in any of claims 9 to 11, wherein:
the engine system includes a variable-ratio gearbox between the engine and the output member.

13. An engine system as claimed in any of claims 9 to 12, wherein:
the engine system includes a second sensor for producing a further electrical signal indicative the speed of the engine or from which the speed of the engine can be derived, the further electrical signal being received by the further signal receiving means of the fuel economy unit.

14. A motor vehicle having an engine system as claimed in any of claims 9 to 13, wherein the speed of the output member is substantially proportional to the speed of the vehicle.

## Patentansprüche

1. Kraftstoffeinspareinheit für ein Motorsystem, umfassend einen Motor mit einer Bedarfseingabe, ein Ausgabeelement, das von dem Motor angetrieben werden kann, und eine nutzerbedienbare Bedarfssteuerung für ein Bereitstellen eines Bedarfssignals, das an die Motorbedarfseingabe gekoppelt ist, um die Motorausgabe zu steuern, die Kraftstoffeinspareinheit umfassend:
Mittel für ein Empfangen eines Eingabesignals, das eine Beschleunigung des Ausgabeelements angibt oder von dem eine Beschleunigung des Ausgabeelements abgeleitet werden kann; wobei die Eingabeempfangsmittel oder ein weiteres Eingabeempfangsmittel angeordnet sind, um ein Eingabesignal zu empfangen, das die Motorgeschwindigkeit angibt oder von dem die Motorgeschwindigkeit abgeleitet werden kann; wobei die Eingabeempfangsmittel oder ein weiteres Eingabeempfangsmittel angeordnet sind, um ein Eingabesignal zu empfangen, das die Geschwindigkeit des Ausgabeelements angibt oder von dem die Geschwindigkeit des Ausgabeelements abgeleitet werden kann;
Mittel für ein Modifizieren der Kopplung des Bedarfssignals an die Motorbedarfseingabe in Abhängigkeit von der Beschleunigung des Ausgabeelements, um die Beschleunigung des Ausgabeelements zu beschränken, wobei:
die Modifizierungsmittel bedienbar sind, um ein erstes Bedarfssignal P_{LimA} zu berechnen, wobei das erste Bedarfssignal P_{LimA} einen sich fortschreitend verringernden Bedarf darstellt, während die Beschleunigung des Ausgabeelements einen Beschleunigungsschwellwert überschreitet, wobei die Modifizierungsmittel konfiguriert sind, um den Beschleunigungsschwellwert zu berechnen unter Verwendung der Motogeschwindigkeit, die durch das Eingabesignal bereitgestellt wird, das die Motorgeschwindigkeit angibt oder von dem die Motorgeschwindigkeit abgeleitet werden kann, sodass der Beschleunigungsschwellwert von der Motogeschwindigkeit abhängig ist,
die Modifizierungsmittel zusätzlich bedienbar sind, um ein zweites Bedarfssignal P_{LimR} zu berechnen, wobei das zweite Bedarfssignal P_{LimR} einen sich fortschreitend verringernden Bedarf darstellt, während die Motorgeschwindigkeit einen Motorgeschwindigkeitsschwellwert überschreitet, wobei die Motorgeschwindgkeit auch durch das Eingabesignal bereitgestellt wird, das die Motogeschwindigkeit angibt oder von dem die Motorgeschwindigkeit abgeleitet werden kann,
die Modifizierungsmittel zusätzlich bedienbar sind, um ein drittes Bedarfssignal P_{LimS} zu berechnen, wobei das dritte Bedarfssignal P_{LimS} einen sich fortschreitend verringernden Bedarf darstellt, während die Geschwindigkeit des Ausgabeelements einen Ausgabeelementgeschwindigkeitsschwellwert überschreitet,
der Beschleunigungsschwellwert berechnet wird durch Liefern der Motorgeschwindigkeit an eine Wertetabelle oder mathematische Funktion und der Motorgeschwindigkeitsschwellwert und der Ausgabeelementgeschwindigkeitsschwellwert vorgegebene konstante Werte sind,
**dadurch gekennzeichnet, dass**:
die Modifizierungsmittel konfiguriert sind, um ein modifiziertes Bedarfssignal P₂ zu berechnen, um durch Vergleichen der folgenden vier Signale auf die Motorbedarfseingabe angewendet zu werden: ein Eingabegaspedalsignal P₁, das von der nutzerbedienbaren Bedarfssteuerung empfangen wird, das erste Bedarfssignal P_{LimA}, das zweite Bedarfssignal P_{LimR} und das dritte Bedarfssignal P_{LimS}, wobei:
das modifizierte Bedarfssignal das geringste der vier Signale ist.

2. Kraftstoffeinspareinheit nach Anspruch 1, wobei das Eingabesignal, das die Motorgeschwindigkeit angibt oder von dem die Motorgeschwindigkeit abgeleitet werden kann, ein Motorkurbelpositionssignal ist und die Kraftstoffeinspareinheit ferner eine Frequenzerkennungsfunktionseinheit (41) umfasst, die konfiguriert ist, um die Frequenz des Motorkurbelpositionssignals zu erkennen und dadurch die Motorgeschwindigkeit bereitzustellen.

3. Kraftstoffeinspareinheit nach Anspruch 1, wobei:
der Beschleunigungsschwellwert mit sich erhöhender Motorgeschwindigkeit fortschreitend abnimmt.

4. Kraftstoffeinspareinheit nach einem der vorangehenden Ansprüche, ferner umfassend:
Mittel für ein Ableiten der Beschleunigung des Ausgabeelements durch Differentiation hinsichtlich der Zeit der Geschwindigkeit des Ausgabeelements.

5. Kraftstoffeinspareinheit nach Anspruch 1, ferner umfassend ein Telefonnachrichtenübermittlungs-GSM-Modul (53), das konfiguriert ist, um es den vorgegebenen Konstanten und der Wertetabelle zu ermöglichen, aus der Ferne geändert zu werden.

6. Motorsystem, umfassend:
einen Motor mit einer Bedarfseingabe;
ein Ausgabeelement, das von dem Motor angetrieben werden kann;
eine nutzerbedienbare Bedarfssteuerung für ein Bereitstellen eines Bedarfssignals, das an die Motorbedarfseingabe gekoppelt ist, um die Motorausgabe zu steuern; und
eine Kraftstoffeinspareinheit nach einem der vorangehenden Ansprüche für ein Modifizieren der Kopplung des Bedarfssignals an die Motorbedarfsausgabe.

7. Motorsystem nach Anspruch 6, wobei:
der Motor ein Verbrennungsmotor ist oder einen Verbrennungsmotor umfasst.

8. Motorsystem nach Anspruch 6 oder 7, wobei:
der Motor ein elektrischer Motor ist oder einen elektrischen Motor umfasst.

9. Motorsystem nach einem der Ansprüche 6 bis 8, wobei:
der Motor eine elektronische Motorsteuerung mit einer elektrischen Bedarfseingabe, die als eine Motorbedarfseingabe agiert, umfasst;
die nutzerbedienbare Bedarfssteuerung einen Bedarfssensor für ein Produzieren eines elektrischen Bedarfssignals abhängig von der Position der Bedarfssteuerung und eine Verbindung zum Verbinden des Bedarfssignals mit der Bedarfseingabe der Motorsteuerung umfasst; und
die Modifizierungsmittel bedienbar sind, um das Bedarfssignal zwischen dem Bedarfssensor und der Bedarfseingabe der Motorsteuerung zu modifizieren.

10. Motorsystem nach einem der Ansprüche 6 bis 9, wobei:
das Motorsystem einen ersten Sensor für ein Produzieren eines elektrischen Signals, das die Beschleunigung des Ausgabeelements angibt oder von dem die Beschleunigung des Ausgabeelements abgeleitet werden kann, umfasst, wobei das elektrische Signal durch die Signalempfangsmittel der Kraftstoffeinspareinheit empfangen wird.

11. Motorsystem nach Anspruch 10, wobei:
der erste Sensor angeordnet ist, um ein elektrisches Signal zu produzieren, das die Geschwindigkeit des Ausgabeelements angibt oder von dem die Geschwindigkeit des Ausgabeelements abgeleitet werden kann.

12. Motorsystem nach einem der Ansprüche 9 bis 11, wobei:
das Motorsystem ein Getriebegehäuse mit veränderlichem Größenverhältnis zwischen dem Motor und dem Ausgabeelement umfasst.

13. Motorsystem nach einem der Ansprüche 9 bis 12, wobei:
das Motorsystem einen zweiten Sensor für ein Produzieren eines weiteren elektrischen Signals, das die Motorgeschwindigkeit angibt oder von dem die Motorgeschwindigkeit abgeleitet werden kann, umfasst, wobei das weitere elektrische Signal durch die weiteren Signalempfangsmittel der Kraftstoffeinspareinheit empfangen wird.

14. Motorfahrzeug mit einem Motorsystem nach einem der Ansprüche 9 bis 13, wobei die Geschwindigkeit des Ausgabeelements im Wesentlich proportional zu der Geschwindigkeit des Fahrzeugs ist.

## Revendications

1. Unité d'économie de carburant pour un système de moteur comprenant un moteur ayant une entrée de demande, un élément de sortie pouvant être entraîné par le moteur et une commande de demande actionnable par l'utilisateur fournissant un signal de demande couplé à l'entrée de demande de moteur pour commander la puissance du moteur, l'unité d'économie de carburant comprenant :
un moyen destiné à recevoir un signal d'entrée indiquant une accélération de l'élément de sortie ou à partir duquel une accélération de l'élément de sortie peut être dérivée ; le moyen de réception d'entrée, ou un moyen de réception d'entrée supplémentaire, étant agencé pour recevoir un signal d'entrée indiquant la vitesse du moteur ou à partir duquel la vitesse du moteur peut être dérivée ; le moyen de réception d'entrée, ou un moyen de réception d'entrée supplémentaire, étant agencé pour recevoir un signal indiquant la vitesse de l'élément de sortie ou à partir duquel la vitesse de l'élément de sortie peut être dérivée ;
un moyen destiné à modifier le couplage du signal de demande à l'entrée de demande de moteur au moment de l'accélération de l'élément de sortie pour limiter l'accélération de l'élément de sortie,
le moyen de modification pouvant être actionné pour calculer un premier signal de demande P_{LimA}, le premier signal de demande P_{LimA} représentant une demande en réduction progressive tandis que l'accélération de l'élément de sortie dépasse une valeur seuil d'accélération, le moyen de modification étant configuré pour calculer la valeur seuil d'accélération en utilisant la vitesse du moteur fournie par le signal d'entrée indiquant la vitesse du moteur ou à partir duquel la vitesse du moteur peut être dérivée, de sorte que la valeur seuil d'accélération soit dépendante de la vitesse du moteur,
le moyen de modification pouvant, de plus, être actionné pour calculer un deuxième signal de demande P_{LimR}, le deuxième signal de demande P_{LimR} représentant une demande en réduction progressive tandis que la vitesse du moteur dépasse une valeur seuil de vitesse de moteur, la vitesse du moteur étant également fournie par le signal d'entrée indiquant la vitesse du moteur ou à partir duquel la vitesse du moteur peut être dérivée,
le moyen de modification pouvant, de plus, être actionné pour calculer un troisième signal de demande P_{LimS}, le troisième signal de demande P_{LimS} représentant un demande en réduction progressive tandis que la vitesse de l'élément de sortie dépasse une valeur seuil de vitesse d'élément de sortie,
la valeur seuil d'accélération étant calculée par l'apport de la vitesse du moteur à une table de consultation ou une fonction mathématique et la valeur seuil de vitesse de moteur et les valeurs seuil de vitesse d'élément de sotie étant des valeurs constant prédéfinies,
**caractérisée en ce que** :
le moyen de modification est configuré pour calculer un signal de demande modifié P₂ à appliquer à l'entrée de demande de moteur par comparaison des quatre signaux suivants : un signal de pédale d'accélérateur d'entrée P₁ reçu depuis la commande de demande actionnable par l'utilisateur, le premier signal de demande P_{LimA}, le deuxième signal de demande P_{LimR} et le troisième signal de demande P_{LimS},
le signal de demande modifié étant le dernier desdits quatre signaux.

2. Unité d'économie de carburant telle que revendiquée dans la revendication 1, dans laquelle le signal d'entrée indiquant la vitesse du moteur ou à partir duquel la vitesse du moteur peut être dérivée est un signal de position de vilebrequin de moteur et l'unité d'économie de carburant comprend en outre une unité de fonction de détection de fréquence (41) configurée pour détecter la fréquence du signal de position de vilebrequin de moteur et ainsi fournir la vitesse du moteur.

3. Unité d'économie d'énergie telle que revendiquée dans la revendication 1, dans laquelle :
la valeur seuil d'accélération diminue progressivement avec l'élévation de la vitesse de moteur.

4. Unité d'économie d'énergie telle que revendiquée dans l'une quelconque des revendications précédentes, comprenant outre :
un moyen destiné à dériver l'accélération de l'élément de sortie par différentiation par rapport au temps de la vitesse de l'élément de sortie.

5. Unité d'économie d'énergie telle que revendiquée dans la revendication 1, comprenant en outre un module de messagerie GSM téléphonique (53) configuré pour permettre une modification à distance des constantes prédéfinies et de la table de consultation.

6. Système de moteur comprenant :
un moteur ayant une entrée de demande ;
un élément de sortie pouvant être entraîné par le moteur ;
une commande de demande actionnable par l'utilisateur destinée à fournir un signal de demande couplé à l'entrée de demande de moteur pour commander la puissance de moteur ; et
une unité d'économie de carburant telle que revendiquée dans l'une quelconque des revendications précédentes, destinée à modifier le couplage du signal de demande à l'entrée de demande de moteur.

7. Système de moteur tel que revendiqué dans la revendication 6, dans lequel :
le moteur est ou comprend un moteur à combustion interne.

8. Système de moteur tel que revendiqué dans la revendication 6 ou 7, dans lequel :
le moteur est ou comprend un moteur électrique.

9. Système de moteur tel que revendiqué dans l'une quelconque des revendications 6 à 8, dans lequel :
le moteur comprend une UC électronique ayant une entrée de demande électrique jouant le rôle de l'entrée de demande de moteur ;
la commande de demande actionnable par l'utilisateur comprend un capteur de demande destiné à produire un signal de demande électrique sur la position de la commande de demande, et une connexion destinée à connecter le signal de demande à l'entrée de demande de l'UC ; et
le moyen de modification peut être actionné pour modifier le signal de demande entre le capteur de demande et l'entrée de demande de l'UC.

10. Système de moteur tel que revendiqué dans l'une quelconque des revendications 6 à 9, dans lequel :
le système de moteur comprend un premier capteur destiné à produire un signal électrique indiquant une accélération de l'élément de sortie ou à partir duquel une accélération de l'élément de sortie peut être dérivée, le signal électrique étant reçu par le moyen de réception de signal de l'unité d'économie de carburant.

11. Système de moteur tel que revendiqué dans la revendication 10, dans lequel :
le premier capteur est agencé pour produire un signal électrique indiquant la vitesse de l'élément de sortie ou à partir duquel la vitesse de l'élément de sortie peut être dérivée.

12. Système de moteur tel que revendiqué dans l'une quelconque des revendications 9 à 11, dans lequel :
le système de moteur comprend une boîte de vitesse à rapport variable entre le moteur et l'élément de sortie.

13. Système de moteur tel que revendiqué dans l'une quelconque des revendications 9 à 12, dans lequel :
le système de moteur comprend un deuxième capteur destiné à produire un signal électrique supplémentaire indiquant la vitesse du moteur ou à partir duquel la vitesse du moteur peut être dérivée, le signal électrique supplémentaire étant reçu par le moyen de réception de signal supplémentaire de l'unité d'économie de carburant.

14. Véhicule à moteur ayant un système de moteur tel que revendiqué dans l'une quelconque des revendications 9 à 13, dans lequel la vitesse de l'élément de sortie est sensiblement proportionnelle à la vitesse du véhicule.
